# EUROPEAN PATENT APPLICATION

(11) **EP 4 486 001 A1**
(43) Date of publication of application: **01.01.2025**
(21) Application number: 22926534.3
(22) Date of filing: 21.02.2022
(51) Int. Cl.: H04W 36/00

(54) **CELL RE-SELECTION PRIORITY DETERMINATION METHOD AND APPARATUS, AND TERMINAL AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); JIANG, Xiaowei, Beijing 100085 (CN)
(74) Representative: Stöckeler, Ferdinand
(86) International application number: PCT/CN2022/077154
(87) International publication number: WO 2023/155213

(57) **Abstract**

Provided in the present application are a cell re-selection priority determination method and apparatus, and a terminal and a storage medium. The method comprises: determining relative frequency priorities between at least two frequencies on the basis of frequency priority policies (201); and in response to the at least two relative frequency priorities determined on the basis of at least two frequency priority policies conflicting, determining at least one of the frequency priority policies, and determining, on the basis of the determined frequency priority policy, the conflicting relative frequency priorities between the frequencies (202). By means of the present application, the rationality of a terminal camping on a cell in a slice or slice group and the access performance of the terminal in the slice or slice group are improved.

## Description

### TECHNICAL FIELD

The disclosure relates to technologies for resolving a frequency priority conflict in a cell reselection process, in particular to a method for determining a cell reselection priority, an apparatus for determining a cell reselection priority, a user equipment (UE) and a storage medium.

### BACKGROUND

When a user equipment (UE) is in an idle or inactive state, it needs to continuously perform cell reselection in order to reside in a cell with a higher priority or better signal quality. A network side may control the UE's residence by setting different frequency priorities, and the UE selects a cell with the best signal quality on a certain frequency for better services.

The cell reselection includes same-frequency cell reselection and hetero-frequency cell reselection. The same-frequency cell reselection mainly focuses on solving wireless coverage problems, and the hetero-frequency cell reselection aims to solve wireless coverage problems and achieve load balancing.

In the R17 standard, it is proposed to support slice-based cell reselection. A base station sends frequency priority information corresponding to slices/slice groups via a system information block (SIB) or a radio resource control (RRC) release message. An access stratum (AS) of the UE receives the expected information of the slices/slice groups indicated via a non-access stratum (NAS) and performs slice reselection based on slice reselection information sent by the base station, to realize the slice-based cell reselection and reselect a cell that supports the expected slice of the UE to reside as soon as possible.

A network slice can provide a complete end-to-end virtual network for a specific user. By distributing network resources onto multiple network slices, 5G network slice can provide differentiated services for users with different service requirements such as communication latency, reliability, capacity, isolation, and other functions. The operator's network will be able to serve not only information consumption services with best effort transmission as a communication requirement, but also production control services with deterministic transmission as a communication requirement, and allocate logically or physically isolated network resources for services with very different communication requirements. A network slice consists of a radio access network (RAN) portion and a core network (CN) portion. The implementation of network slice relies on a principle that traffic of different slices is handled by different protocol data unit (PDU) sessions. The network can implement different network slices by scheduling and providing different L1/L2 configurations. Each slice is uniquely identified by single network slice selection assistance information (S-NSSAI), which consists of a slice/service type (SST) and a slice differentiator (SD). Network slice selection assistance information (NSSAI) includes one or more S-NSSAIs.

### SUMMARY

In view of this, embodiments of the disclosure provide a method for determining a cell reselection priority, an apparatus for determining a cell reselection priority, a user equipment (UE) and a storage medium.

According to a first aspect of the disclosure, there is provided a method for determining a cell reselection priority. The method is performed by a UE, and includes:
determining a relative frequency priority between at least two frequencies based on a frequency priority strategy; and
in response to a conflict between at least two relative frequency priorities determined based on at least two frequency priority strategies, determining at least one frequency priority strategy, and determining the relative frequency priority between the conflicting frequencies based on the determined frequency priority strategy.

In some exemplary embodiments, the frequency priority strategy includes at least one of:
a frequency priority determination rule determined based on a protocol; and/or
a frequency priority configuration based on a network-side configuration.

In some exemplary embodiments, the conflict between at least two relative frequency priorities, includes:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

In some exemplary embodiments, the first frequency priority determination rule includes: determining the relative frequency priority between at least two frequencies based on a supported slice priority; and
the second frequency priority determination rule includes: determining the relative frequency priority between at least two frequencies based on a frequency priority between the at least two frequencies based on the network-side configuration.

In some exemplary embodiments, determining the at least one frequency priority strategy, and determining the relative frequency priority between the frequencies based on the determined frequency priority strategy, include:
determining the relative frequency priority between the at least two frequencies based on a supported slice priority; or
determining the relative frequency priority between the at least two frequencies by ignoring the frequency priorities of the at least two frequencies based on the network-side configuration; or
determining the relative frequency priority between the at least two frequencies based on a supported slice priority, and determining the relative frequency priority between the at least two frequencies, that has not been determined, according to the frequency priorities of the at least two frequencies based on the network-side configuration.

In some exemplary embodiments, the first frequency priority configuration includes: frequency priorities of different frequencies supporting a first slice and/or a first slice group based on the network-side configuration; and
the second frequency priority configuration includes: frequency priorities of different frequencies supporting a second slice and/or a second slice group based on the network-side configuration.

In some exemplary embodiments, determining the at least one frequency priority strategy, and determining the relative frequency priority between the frequencies based on the determined frequency priority strategy, include:
in response to two slices and/or two slice groups with different slice priorities, determining the relative frequency priority between the at least two frequencies according to frequency priorities of different frequencies supporting a slice and/or a slice group with a higher priority based on the network-side configuration; or
in response to two slices and/or two slice groups with the same slice priority, selecting one of the slices and/or slice groups, and determining the relative frequency priority between the at least two frequencies according to frequency priorities of different frequencies supporting the slice and/or slice group based on the network-side configuration.

According to a second aspect of the disclosure, there is provided an apparatus for determining a cell reselection priority. The apparatus is applied to a UE, and includes:
a first determining unit, configured to determine a relative frequency priority between at least two frequencies based on a frequency priority strategy; and
a second determining unit, configured to, in response to a conflict between at least two relative frequency priorities determined based on at least two frequency priority strategies, determine at least one frequency priority strategy, and determine the relative frequency priority between the conflicting frequencies based on the determined frequency priority strategy.

In some exemplary embodiments, the frequency priority strategy includes at least one of:
a frequency priority determination rule determined based on a protocol; and/or
a frequency priority configuration based on a network-side configuration.

In some exemplary embodiments, the conflict between at least two relative frequency priorities, includes:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

In some exemplary embodiments, the first frequency priority determination rule includes:
determining the relative frequency priority between at least two frequencies based on a supported slice priority; and
the second frequency priority determination rule comprises: determining the relative frequency priority between at least two frequencies based on a frequency priority between the at least two frequencies based on the network-side configuration.

In some exemplary embodiments, the second determining unit is configured to:
determine the relative frequency priority between the at least two frequencies based on the supported slice priority; or
determine the relative frequency priority between the at least two frequencies by ignoring the frequency priorities of the at least two frequencies based on the network-side configuration; or
determine the relative frequency priority between the at least two frequencies based on the supported slice priority, and determine the relative frequency priority between at least two frequencies, that has not been determined, according to the frequency priorities of the at least two frequencies based on the network-side configuration.

In some exemplary embodiments, the first frequency priority configuration includes: frequency priorities of different frequencies supporting a first slice and/or a first slice group based on the network-side configuration; and
the second frequency priority configuration includes: frequency priorities of different frequencies supporting a second slice and/or a second slice group based on the network-side configuration.

In some exemplary embodiments, the second determining unit is configured to:
in response to two slices and/or two slice groups with different slice priorities, determine the relative frequency priority between the at least two frequencies according to frequency priorities of different frequencies supporting a slice and/or a slice group with a higher priority based on the network-side configuration; or
in response to two slices and/or two slice groups with the same slice priority, select one of the slices and/or slice groups, and determine the relative frequency priority between the at least two frequencies according to frequency priorities of different frequencies supporting the slice and/or slice group based on the network-side configuration.

According to a third aspect of the disclosure, there is provided a UE. The UE includes: a processor, a transceiver, a memory and an executable program stored on the memory and executable by the processor. When the executable program is executed by the processor, the steps of the method for determining a cell reselection priority are implemented.

According to a fourth aspect of the disclosure, there is provided a storage medium having an executable program stored thereon. When the executable program is executed by a processor, the steps of the method for determining a cell reselection priority are implemented.

The technical solutions of embodiments of the disclosure, when the UE detects a conflict between the relative frequency priorities determined according to multiple frequency priority determination strategies, it selects a corresponding strategy in the frequency priority determination strategies to determine the relative frequency priority between the conflicting frequencies. In the embodiments of the disclosure, in order to avoid the conflict between the relative frequency priorities, the conflicting relative frequency priorities are re-determined, to facilitate the UE to carry out cell reselection in a slice or slice group without causing confusion in cell reselection, thereby improving the rationality of the UE to reside in a cell of the slice or slice group and improving the access performance of the UE in the slice or slice group.

### BRIEF DESCRIPTION OF THE DRAWINGS

The accompanying drawings, which are incorporated in and constitute a part of this specification, illustrate embodiments consistent with the disclosure and, together with the description, serve to explain the principles of embodiments of the disclosure.
FIG. 1 is a schematic diagram illustrating a wireless communication system according to an exemplary embodiment.
FIG. 2 is a flowchart illustrating a method for determining a cell reselection priority according to an exemplary embodiment.
FIG. 3 is a schematic diagram illustrating a structure of an apparatus for determining a cell reselection priority according to an exemplary embodiment.
FIG. 4 is a schematic diagram illustrating a structure of a user equipment (UE) according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a", "an" and "this" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining that".

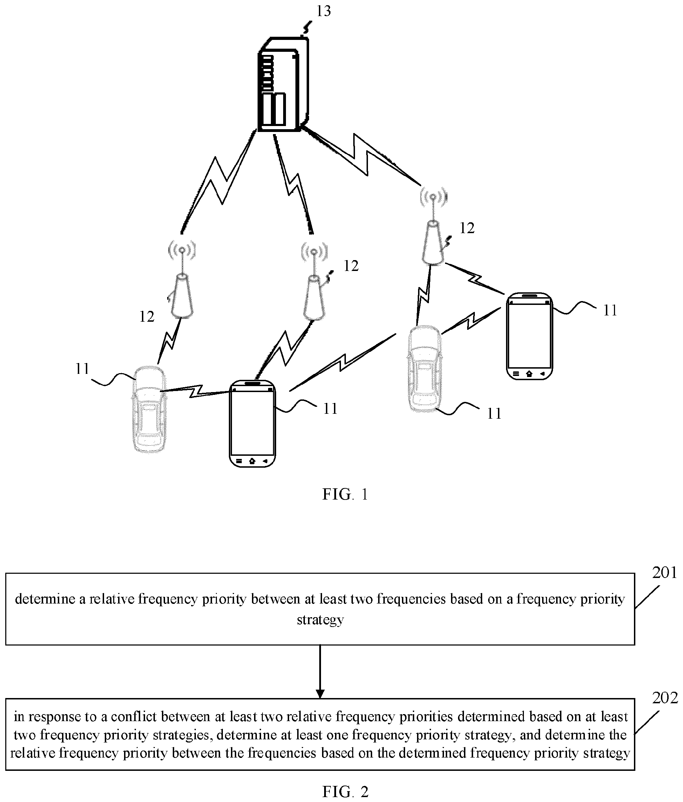

FIG. 1 is a schematic diagram illustrating a wireless communication system according to an embodiment. As illustrated in FIG. 1, the wireless communication system is a communication system based on cellular mobile communication technology. The wireless communication system may include: a plurality of user equipments (UEs) 11 and a plurality of base stations 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a mobile phone (or cellular phone), and a computer with the IoT UE. For example, the UE 11 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit having wireless communication function or a wireless communication device external to the electronic control unit. Or, the UE 11 may be a roadside device, for example, a street light, a signal light, or other roadside devices having a wireless communication function.

The base station 12 may be a network side device in the wireless communication system. The wireless communication system may be a 4th Generation (4G) mobile communication system, also known as Long Term Evolution (LTE) system. Or, the wireless communication system may also be a 5G system, also known as New Radio (NR) system or 5G NR system. Or, the wireless communication system may be a system of any generation. The access network in the 5G system may be called New Generation-Radio Access Network (NG-RAN) or a machine type communication (MTC) system.

The base station 12 may be an evolved base station (eNB) employed in the 4G system. Or, the base station 12 may be a base station (gNB) with a centralized distributed architecture employed in the 5G system. When the base station 12 adopts a centralized-distributed architecture, it usually includes a central unit (CU) and at least two distributed units (DUs). The CU is equipped with protocol stacks of a packet data convergence protocol (PDCP) layer, a radio link control (RLC) layer, and a media access control (MAC) layer. The DU is equipped with a protocol stack of a physical (PHY) layer, and the specific implementation of the base station 12 is not limited in embodiments of the disclosure.

A wireless connection is established between the base station 12 and the UE 11 via a radio interface. In different implementations, the radio interface is a radio interface based on the 4G standard. Or, the radio interface is a radio interface based on the 5G standard, such as the NR. Or, the radio interface may be a radio interface based on a standard beyond 5G.

In some embodiments, an end to end (E2E) connection is established between the UEs 11, such as, vehicle to vehicle (V2V) communication, vehicle to infrastructure (V2I) communication, and vehicle to pedestrian (V2P) communication in vehicle to everything (V2X) communication scenarios.

In some embodiments, the above wireless communication system may also include a network management device 13.

The execution subject involved in embodiments of the disclosure includes, but is not limited to, a UE in a cellular mobile communication system, and a base station of the cellular mobile communication, and the like.

For a cell reselection scenario involving cell slices, a frequency reselection scheme in the current protocol is to determine a reselection frequency priority, without introducing slice iteration, by considering slice-specific frequency priorities of all slices provided by a non-access stratum (NAS) layer and a legacy frequency priority.

The currently supported method for determining a reselection priority is provided as follows.

Reselection priority determination rule 1 (Rule 1) is that a relative frequency priority of a frequency supporting a slice with a higher priority is higher than a relative frequency priority of a frequency only supporting a slice with a lower priority.

Rule 2 is that for multiple frequencies that support a slice/slice group with the same priority, the relative frequency priority is determined according to a slice specific frequency priority (*sliceSpecificFrequencyPriority*) configured by the network.

If the network side does not configure the *sliceSpecificFrequencyPriority* for a frequency that supports the slice, the frequency is considered as having the lowest relative frequency priority with respect to the other frequencies in the slice.

Rule 3 is that a relative frequency priority of a frequency that supports a slice is higher than a relative frequency priority of a frequency that does not support the slice. For the relative frequency priority among multiple frequencies that do not support the slice, it is determined according to a legacy frequency priority (*CellReselectionPriority*) configured by the network.

For frequencies that support multiple slices, there may be conflict between the relative frequency priorities determined in accordance with the above Rules, which is illustrated in the following examples.

Assuming that according to a slice priority, Slice1>Slice2, and frequency priorities of frequencies that support the slices configured by the network is Slice1 (F1>F2), Slice2 (F2>F3>F1). In embodiments of the disclosure, the frequency priority of frequencies that support slices is determined according to the *sliceSpecificFrequencyPriority* configured by the network. The *sliceSpecificFrequencyPriority* configured by the network includes frequency priorities of frequencies that support the slice.

The relative frequency priority determined according to Rule 1 is (F1, F2)>F3, while the relative frequency priority determined according to Rule 2 is F1>F2, F2>F3>F1.

Therefore, the relative frequency priority determined according to Rule 2, i.e., F3>F1, is in conflict with the relative frequency priority determined according to Rule 1, i.e., F1>F3.

As another conflicting example, assuming that according to the slice priority, Slice1 >Slice2;
and frequency priorities of frequencies associated with the slices configured by the network is Slice1 (F1>F2), Slice2 (F2>F1);
according to Rule 1, it is determined that F1 and F2 both have a high priority, but the relative frequency priority determined according to Rule 2 is F1>F2 and F2>F1;
and thus the relative frequency priority between F1 and F2 still cannot be determined.

The embodiments of the disclosure are aimed at the above practical technical problems and provide corresponding solutions through the following technical solutions, which are illustrated in detail below.

FIG. 2 is a flowchart illustrating a method for determining a cell reselection priority according to an exemplary embodiment. As illustrated in FIG. 2, the method for determining a cell reselection priority is performed by a UE. The method includes the following processing steps.

At step 201, a relative frequency priority between at least two frequencies is determined based on a frequency priority strategy.

In an embodiment of the disclosure, the frequency priority strategy includes at least one of:
a frequency priority determination rule determined based on a protocol; and/or
a frequency priority configuration based on a network-side configuration.

Correspondingly, a conflict between at least two relative frequency priorities, includes:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

In an embodiment, the first frequency priority determination rule includes:
determining the relative frequency priority of frequencies according to a supported slice priority.

In an embodiment, the first frequency priority determination rule includes:
a relative frequency priority of a frequency supporting a slice with a higher priority is higher than a relative frequency priority of a frequency supporting a slice with a lower priority.

In an embodiment, the first frequency priority determination rule includes:
a relative frequency priority of a frequency supporting a slice with a higher priority is higher than a relative frequency priority of a frequency only supporting a slice with a lower priority.

The relative frequency priority between the at least two frequencies is determined according to the frequency priorities of the at least two frequencies based on the network-side configuration.

In an embodiment of the disclosure, the frequency priority determination rule is predefined and determined by 3GPP related protocols.

In an embodiment of the disclosure, the first frequency priority configuration includes: frequency priorities of different frequencies supporting a first slice and/or a first slice group configured by the network; and
the second frequency priority configuration includes: frequency priorities of different frequencies supporting a second slice and/or a second slice group configured by the network.

In an embodiment of the disclosure, the frequency priority configuration is provided by the network side through a system information block (SIB) message and/or a dedicated signaling, and the UE obtains the frequency priority configuration by receiving the SIB message and/or dedicated signaling.

At step 202, in response to a conflict between at least two relative frequency priorities determined based on at least two frequency priority strategies, at least one frequency priority strategy is determined, and the relative frequency priority between the conflicting frequencies is determined based on the determined frequency priority strategy.

Determining the second frequency priority determination rule determined based on the protocol, and determining the relative frequency priority between the conflicting frequencies according to the second frequency priority determination rule determined based on the protocol include:
determining the relative frequency priority between the at least two frequencies based on the supported slice priority; as an implementation, a relative frequency priority of a frequency supporting a slice with a higher priority is higher than a relative frequency priority of a frequency supporting a slice with a lower priority; or, as an implementation, a relative frequency priority of a frequency supporting a slice with a higher priority is higher than a relative frequency priority of a frequency only supporting a slice with a lower priority; or
determining the relative frequency priority between the at least two frequencies by ignoring the frequency priorities of the at least two frequencies based on the network-side configuration; or
determining the relative frequency priority between the at least two frequencies based on the supported slice priority, and determining the relative frequency priority between the at least two frequencies, that has not been determined, according to the frequency priorities of the at least two frequencies based on the network-side configuration.

Determining at least one frequency priority configuration based on the network-side configuration, and determining the relative frequency priority between the conflicting frequencies according to the frequency priority configuration based on the network-side configuration, include:
in response to two slices and/or two slice groups with different slice priorities, determining the relative frequency priority between the at least two frequencies according to frequency priorities of different frequencies supporting the slice and/or slice group with a higher priority based on the network-side configuration; or
in response to two slices and/or two slice groups with the same slice priority, selecting one of the slices and/or slice groups, and determining the relative frequency priority between the at least two frequencies according to frequency priorities of different frequencies supporting the slice and/or slice group based on the network-side configuration.

In an embodiment of the disclosure, in detail, determining the conflict between the relative frequency priorities between frequencies includes: a relative frequency priority between at least two frequencies determined according to a first frequency priority determination rule conflicts with a relative frequency priority between the at least two frequencies determined according to a second frequency priority determination rule. As an example, the first frequency priority determination rule includes: determining a relative frequency priority of frequencies according to the supported slice priority, that is, determining the relative frequency priority between the at least two frequencies based on the supported slice priority.

As an embodiment, the first frequency priority determination rule includes:
a relative frequency priority of a frequency supporting a slice with a higher priority is higher than a relative frequency priority of a frequency supporting a slice with a lower priority.

As an embodiment, the first frequency priority determination rule includes:
a relative frequency priority of a frequency supporting a slice with a higher priority is higher than a relative frequency priority of a frequency only supporting a slice with a lower priority.

The second frequency priority configuration includes: a relative frequency priority between multiple frequencies supporting a same slice/slice group or a slice/slice group with the same priority is determined by the network-side configuration.

In an embodiment of the disclosure, the UE determines the relative frequency priority of multiple conflicting frequencies based on the frequency priority determination strategy. Assuming that according to the slice priority, Slice1>Slice2, and the frequency priority of frequencies associated with the slices configured by the network side is Slice1 (F1>F2), Slice2 (F2>F3>F1). According to the first frequency priority determination rule, it is determined that the frequency priority is (F1, F2)> F3, and according to the second frequency priority determination rule, it is determined that the frequency priority is F1>F2, F2>F3>F1. Therefore, the relative frequency priority determined according to the second frequency priority determination rule, i.e., F3>F1, is in conflict with the relative frequency priority determined according to the first frequency priority determination rule, i.e., F1>F3.

At this time, the UE needs to select a corresponding frequency priority determination rule in the frequency priority determination strategies to determine the relative frequency priority using the selected frequency priority determination rule. In the above example, if the UE selects the first frequency priority determination rule to determine the relative frequency priority between the frequencies, the relative frequency priority is determined as F1>F3.

In an embodiment of the disclosure, in response to the conflict between the relative frequency priorities determined based on different frequency priority strategies, determining the relative frequency priority between the conflicting frequencies based on the determined frequency priority strategy includes: determining the relative frequency priority between the frequencies according to the first frequency priority determination rule; or, ignoring the relative frequency priority between the frequencies determined according to the second frequency priority determination rule; or, determining the relative frequency priority between the frequencies according to the first frequency priority determination rule, and determining the relative frequency priority between frequencies, that has not been determined by the first frequency priority determination rule, according to the second frequency priority determination rule.

Assuming that according to the slice priority, Slice1>Slice2, and the *sliceSpecificFrequencyPriority* configured by the network is Slice1 (F1>F2), Slice2 (F2>F 1), according to the first frequency priority determination rule, it is determined that the relative frequency priority is that F1 and F2 both have a high priority, but the relative frequency priority determined according to the second frequency priority determination rule is F1>F2 and F2>F1, the relative frequency priority between the frequencies F1 and F2 cannot be specified, resulting in a conflict between the relative frequency priorities between F1 and F2.

At this time, the UE needs to determine a corresponding frequency priority determination strategy in the frequency priority determination strategies to determine the relative frequency priority between frequencies with conflicting priorities. In the above example, if the UE chooses to determine the relative frequency priority between the frequencies in accordance with the frequency priorities of the frequencies corresponding to the supported Slice1 with a high priority, the relative frequency priority is determined as F1>F2.

In response to the situation where a relative frequency priority conflict occurs based on the frequency priority configurations, the relative frequency priority between frequencies with conflicting priorities is determined according to the selected strategy. In response to two slices and/or two slice groups with different slice priorities, the UE determines the relative frequency priority between frequencies A and B according to frequency priorities of the frequencies A and B configured by a slice or slice group with a higher priority. Or, in response to two slices and/or two slice groups with the same slice priority, the UE selects one of the slices and/or slice groups, and determines the relative frequency priority between the frequencies A and B according to frequency priorities of the frequencies A and B configured by the slice or slice group.

In an embodiment of the disclosure, the UE determines a final relative frequency priority for frequencies with conflicting relative frequency priorities by the selected frequency priority determination strategy, and uses it as a basis for residing in a cell during cell reselection.

The technical solutions of embodiments of the disclosure may be applied in a slice or slice group, and the description in the text in terms of slice or slice group may be cases that involve a slice and/or slice group.

The embodiments of the disclosure avoid the occurrence of confusion in cell reselection, improves the rationality of the UE to reside in a cell of the slice or slice group and improves the access performance of the UE in the slice or slice group.

The essence of the technical solutions of the embodiments of the disclosure is further illustrated below through specific examples.

When a conflict occurs between the relative frequency priority between frequencies determined, by the UE, according to the first frequency priority determination rule and the relative frequency priority between frequencies determined, by the UE, according to the second frequency priority determination rule, a corresponding frequency priority determination rule is determined from the frequency priority determination strategies, and the relative frequency priority between the frequencies with the conflicting relative frequency priorities is determined according to the determined frequency priority determination rule.

The conflict between relative frequency priorities includes a difference between the relative frequency priority between frequency A and frequency B determined in accordance with the first frequency priority determination rule and the relative frequency priority between frequency A and frequency B determined in accordance with the second frequency priority determination rule. The difference includes at least two of the following cases: frequency A>frequency B, frequency A<frequency B, or frequency A=frequency B, it means that there is a conflict between the relative frequency priorities determined in accordance with the frequency priority determination rule A and the frequency priority determination rule B.

In an embodiment of the disclosure, as an example, the first frequency priority determination rule includes: determining the relative frequency priority of frequencies according to a supported slice priority. That is, the relative frequency priority between at least two frequencies is determined based on the supported slice priority.

As an embodiment, the first frequency priority determination rule includes:
a relative frequency priority of a frequency supporting a slice with a higher priority is higher than a relative frequency priority of a frequency supporting a slice with a lower priority.

As an embodiment, the first frequency priority determination rule includes:
a relative frequency priority of a frequency supporting a slice with a higher priority is higher than a relative frequency priority of a frequency only supporting a slice with a lower priority.

The second frequency priority configuration includes: a relative frequency priority between multiple frequencies supporting the same slice/slice group or a slice/slice group with the same priority is determined by the network-side configuration.

When a conflict occurs between the relative frequency priorities between frequencies determined in accordance with the above-described first frequency priority determination rule and the second frequency priority determination rule, the UE determines the relative frequency priority between the frequencies in any of the following ways.
1. The UE determines a relative frequency priority between frequencies in accordance with the above-described first frequency priority determination rule.
2. The UE ignores a relative frequency priority between the frequencies determined in accordance with the above-described second frequency priority determination rule.
3. The UE first determines the relative frequency priority between the frequencies in accordance with the above-described first frequency priority determination rule, and determines the relative frequency priority between frequencies, that has not been determined according to the first frequency priority determination rule, according to the second frequency priority determination rule.

Assuming that according to the slice priority, Slice1>Slice2, and the *sliceSpecificFrequencyPriority* configured by the network is Slice1 (F1>F2), Slice2 (F2>F3>F1). According to the first frequency priority determination rule, it is determined that the relative frequency priority is (F1, F2)>F3, and according to the second frequency priority determination rule, it is determined that the relative frequency priority is F1>F2, and F2>F3>F1. Therefore, the relative frequency priority determined according to the second frequency priority determination rule, i.e., F3>F1, is in conflict with the relative frequency priority determined according to the first frequency priority determination rule, i.e., F1>F3. If the UE chooses to determine the relative frequency priority between the frequencies in accordance with the frequency priorities of the frequencies corresponding to the supported Slice1 with a high priority, the relative frequency priority is determined as F1>F2.

When a conflict occurs between a relative frequency priority between frequencies determined by the UE in accordance with the first frequency priority configuration and a relative frequency priority between frequencies determined in accordance with the second frequency priority configuration, a corresponding frequency priority configuration is determined in the frequency priority configurations, and a relative frequency priority between the frequencies with conflicting relative frequency priorities is determined in accordance with the determined frequency priority configuration.

The conflict between relative frequency priorities includes a difference in the relative frequency priorities between a frequency A and a frequency B determined respectively in accordance with the first frequency priority configuration and the second frequency priority configuration. The difference includes at least two of the following cases: frequency A>frequency B, , frequency A<frequency B, or frequency A=frequency B, it means that there is a conflict between the relative frequency priorities determined in accordance with the frequency priority configuration A and the frequency priority configuration B.

In an embodiment of the disclosure, as an example, the first frequency priority is configured as: frequency priorities of different frequencies configured by the network for a slice or slice group A.

The second frequency priority is configured as: frequency priorities of different frequencies configured by the network for a slice or slice group B.

When a conflict occurs between the relative frequency priorities between the frequencies determined respectively in accordance with the above-described first frequency priority configuration and the second frequency priority configuration, the UE determines the relative frequency priority between the frequencies in any of the following ways.
1. If slice priorities of the two slices or slice groups are different, the UE determines the relative frequency priority between frequency A and frequency B based on the priorities of the frequency A and frequency B configured by the supported slice or slice group with a high priority.
2. If the slice priorities of the two slices or slice groups are the same, the UE determines the relative frequency priority between the frequency A and the frequency B based on the priorities of the frequency A and the frequency B configured by one decided slice or slice group.

In embodiments of the disclosure, where not stated or explicitly described, the frequency priority determined by the frequency priority determination strategy, such as the frequency priority configuration and/or the frequency priority determination rule, refers to the relative frequency priority.

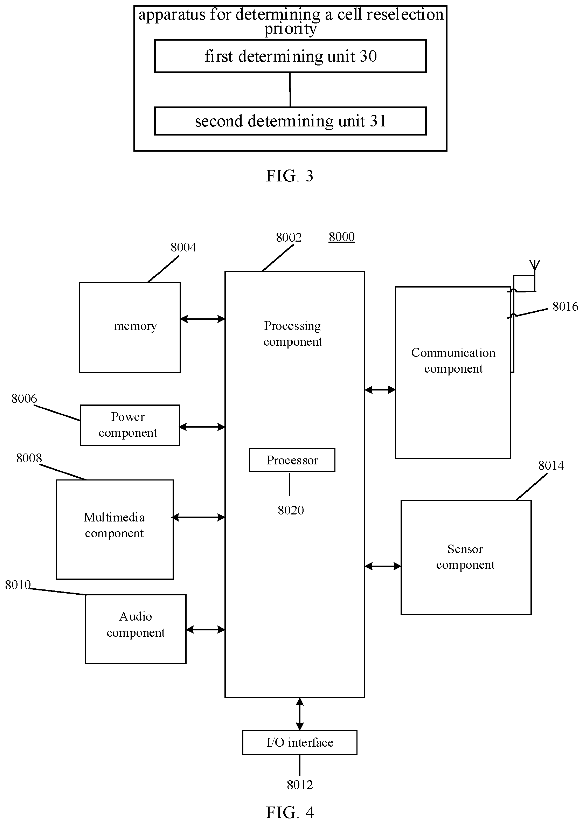

FIG. 3 is a schematic diagram illustrating a structure of an apparatus for determining a cell reselection priority according to an exemplary embodiment. As illustrated in FIG. 3, the apparatus is applied to a UE. The apparatus includes:
a first determining unit 30, configured to determine a relative frequency priority between at least two frequencies based on a frequency priority strategy; and
a second determining unit 31, configured to, in response to a conflict between at least two relative frequency priorities determined based on at least two frequency priority strategies, determine at least one frequency priority strategy, and determine the relative frequency priority between the conflicting frequencies based on the determined frequency priority strategy.

In some exemplary embodiments, the frequency priority strategy includes at least one of:
a frequency priority determination rule determined based on a protocol; and/or
a frequency priority configuration based on a network-side configuration.

In some exemplary embodiments, the conflict between at least two relative frequency priorities, includes:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

In some exemplary embodiments,
as an example, the first frequency priority determination rule includes: determining the relative frequency priority of frequencies according to a supported slice priority, that is, determining the relative frequency priority between at least two frequencies based on the supported slice priority.

As an embodiment, the first frequency priority determination rule includes:
a relative frequency priority of a frequency supporting a slice with a higher priority is higher than a relative frequency priority of a frequency supporting a slice with a lower priority.

As an embodiment, the first frequency priority determination rule includes:
a relative frequency priority of a frequency supporting a slice with a higher priority is higher than a relative frequency priority of a frequency only supporting a slice with a lower priority.

The relative frequency priority between the at least two frequencies is determined according to the frequency priorities of the at least two frequencies based on the network-side configuration.

In some exemplary embodiments, the second determining unit 31 is configured to:
determine the relative frequency priority between the at least two frequencies based on the supported slice priority; or
determine the relative frequency priority between the at least two frequencies by ignoring the frequency priorities of the at least two frequencies based on the network-side configuration; or
determine the relative frequency priority between the at least two frequencies based on the supported slice priority, and determine the relative frequency priority between the at least two frequencies, that have not been determined, according to the frequency priorities of the at least two frequencies based on the network-side configuration.

In some exemplary embodiments, the first frequency priority configuration includes: frequency priorities of different frequencies supporting a first slice and/or a first slice group based on the network-side configuration; and
the second frequency priority configuration includes: frequency priorities of different frequencies supporting a second slice and/or a second slice group based on the network-side configuration.

In some exemplary embodiments, the second determining unit 31 is configured to:
in response to two slices and/or two slice groups with different slice priorities, determine the relative frequency priority between the at least two frequencies according to frequency priorities of different frequencies supporting the slice and/or slice group with a higher priority based on the network-side configuration; or
in response to two slices and/or two slice groups with the same slice priority, select one of the slices and/or slice groups, and determine the relative frequency priority between the at least two frequencies according to frequency priorities of different frequencies supporting the slice and/or slice group based on the network-side configuration.

In an exemplary embodiment, the first determining unit 30 and the second determining unit 31 may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field-programmable gate arrays (FPGAs), general processors, controllers, micro controller units (MCUs), microprocessors or other electronic components, or implemented in combination with one or more radio frequency (RF) antennas, for executing the steps of the method for determining a cell reselection priority as described in the above embodiments.

In the embodiment of the disclosure, the specific manner in which each unit in the apparatus for determining a cell reselection priority shown in FIG. 3 performs operations has been described in detail in the embodiments of the method and will not be repeated here.

FIG. 4 is a block diagram illustrating a UE 8000 according to an exemplary embodiment. For example, the UE 8000 may be a mobile phone, a computer, a digital broadcasting UE, a message transceiver device, a game console, a tablet device, a medical device, a fitness device or a personal digital assistant.

As illustrated in FIG. 4, the UE 8000 may include one or more of the following components: a processing component 8002, a memory 8004, a power component 8006, a multimedia component 8008, an audio component 8010, an input/output (I/O) interface 8012, a sensor component 8014, and a communication component 8016.

The processing component 8002 typically controls overall operations of the UE 8000, such as the operations associated with display, telephone calls, data communications, camera operations, and recording operations. The processing component 8002 may include one or more processors 8020 to perform all or part of the steps in the above described method. Moreover, the processing component 8002 may include one or more modules which facilitate the interaction between the processing component 8002 and other components. For example, the processing component 8002 may include a multimedia module to facilitate the interaction between the multimedia component 8008 and the processing component 8002.

The memory 8004 is configured to store various types of data to support the operation of the UE 8000. Examples of such data include instructions for any applications or methods operated on the UE 8000, contact data, phonebook data, messages, pictures, video, etc. The memory 8004 may be implemented using any type of volatile or nonvolatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 8006 provides power to various components of the UE 8000. The power component 8006 may include a power management system, one or more power sources, and any other components associated with the generation, management, and distribution of power in the UE 8000.

The multimedia component 8008 includes a screen providing an output interface between the UE 8000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 8008 includes a front-facing camera and/or a rear-facing camera. When the UE 8000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 8010 is configured to output and/or input audio signals. For example, the audio component 8010 includes a microphone (MIC) configured to receive an external audio signal when the UE 8000 is in an operation mode, such as a call mode, a recording mode, and a voice recognition mode. The received audio signal may be further stored in the memory 8004 or transmitted via the communication component 8016. In some embodiments, the audio component 8010 further includes a speaker to output audio signals.

The I/O interface 8012 provides an interface between the processing component 8002 and peripheral interface modules, such as a keyboard, a click wheel, buttons, and the like. The buttons may include, but are not limited to, a home button, a volume button, a starting button, and a locking button.

The sensor component 8014 includes one or more sensors to provide status assessments of various aspects of the UE 8000. For instance, the sensor component 8014 may detect an open/closed status of the UE 8000, relative positioning of components, e.g., the display and the keypad, of the UE 8000, a change in position of the UE 8000 or a component of the UE 8000, a presence or absence of user contact with the UE 8000, an orientation or an acceleration/deceleration of the UE 8000, and a change in temperature of the UE 8000. The sensor component 8014 may include a proximity sensor configured to detect the presence of nearby objects without any physical contact. The sensor component 8014 may also include a light sensor, such as a complementary metal oxide semiconductor (CMOS) or charge-coupled device (CCD) image sensor, for use in imaging applications. In some embodiments, the sensor component 8014 may also include an accelerometer sensor, a gyroscope sensor, a magnetic sensor, a pressure sensor, or a temperature sensor.

The communication component 8016 is configured to facilitate communication, wired or wirelessly, between the UE 8000 and other devices. The UE 8000 can access a wireless network based on a communication standard, such as Wi-Fi, 2G or 3G, or a combination thereof. In an embodiment, the communication component 8016 receives a broadcast signal or broadcast associated information from an external broadcast management system via a broadcast channel. In an embodiment, the communication component 8016 further includes a near field communication (NFC) module to facilitate short-range communication. For example, the NFC module may be implemented based on a RF identification (RFID) technology, an infrared data association (IrDA) technology, an ultra-wide band (UWB) technology, a Bluetooth (BT) technology, and other technologies.

In some embodiments, the UE 8000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described method.

In an exemplary embodiment, there is also provided a non-transitory computer readable storage medium including instructions, such as the memory 8004, executable by the processor 8020 in the UE 8000, for performing the above method. For example, the non-transitory computer-readable storage medium may be a ROM, a random access memory (RAM), a CD-ROM, a magnetic tape, a floppy disc, and an optical data storage device.

Embodiments of the disclosure also provide a terminal including a processor, a transceiver, a memory and an executable program stored on the memory and executable by the processor. When the executable program is executed by the processor, the steps of the method for determining a cell reselection priority as described in the above embodiments are implemented.

Embodiments of the disclosure also provide a storage medium having an executable program stored thereon. When the executable program is executed by a processor, the steps of the method for determining a cell reselection priority as described in the above embodiments are implemented.

Other implementation solutions of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a cell reselection priority, performed by a user equipment, comprising:
determining a relative frequency priority between at least two frequencies based on a frequency priority strategy; and
in response to a conflict between at least two relative frequency priorities determined based on at least two frequency priority strategies, determining at least one frequency priority strategy, and determining the relative frequency priority between the conflicting frequencies based on the determined frequency priority strategy.

2. The method of claim 1, wherein the frequency priority strategy comprises at least one of:
a frequency priority determination rule determined based on a protocol; and/or
a frequency priority configuration based on a network-side configuration.

3. The method of claim 1 or 2, wherein the conflict between at least two relative frequency priorities, comprises:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

4. The method of claim 2 or 3, wherein the first frequency priority determination rule comprises: determining the relative frequency priority between at least two frequencies based on a supported slice priority; and
the second frequency priority determination rule comprises: determining the relative frequency priority between at least two frequencies based on a frequency priority between the at least two frequencies based on the network-side configuration.

5. The method of claim 4, wherein determining the at least one frequency priority strategy, and determining the relative frequency priority between the conflicting frequencies based on the determined frequency priority strategy, comprise:
determining the relative frequency priority between the at least two frequencies based on the supported slice priority; or
determining the relative frequency priority between the at least two frequencies by ignoring the frequency priorities of the at least two frequencies based on the network-side configuration; or
determining the relative frequency priority between the at least two frequencies based on the supported slice priority, and determining the relative frequency priority between the at least two frequencies, that has not been determined, according to the frequency priorities of the at least two frequencies based on the network-side configuration.

6. The method of claim 2 or 3, wherein the first frequency priority configuration comprises: frequency priorities of different frequencies supporting a first slice and/or a first slice group based on the network-side configuration; and
the second frequency priority configuration comprises: frequency priorities of different frequencies supporting a second slice and/or a second slice group based on the network-side configuration.

7. The method of claim 6, wherein determining the at least one frequency priority strategy, and determining the relative frequency priority between the conflicting frequencies based on the determined frequency priority strategy, comprise:
in response to two slices and/or two slice groups with different slice priorities, determining the relative frequency priority between the at least two frequencies according to frequency priorities of different frequencies supporting a slice and/or a slice group with a higher priority based on the network-side configuration; or
in response to two slices and/or two slice groups with the same slice priority, selecting one of the slices and/or slice groups, and determining the relative frequency priority between the at least two frequencies according to frequency priorities of different frequencies supporting the slice and/or slice group based on the network-side configuration.

8. An apparatus for determining a cell reselection priority, applied to a user equipment, comprising:
a first determining unit, configured to determine a relative frequency priority between at least two frequencies based on a frequency priority strategy; and
a second determining unit, configured to, in response to a conflict between at least two relative frequency priorities determined based on at least two frequency priority strategies, determine at least one frequency priority strategy, and determine the relative frequency priority between the conflicting frequencies based on the determined frequency priority strategy.

9. The apparatus of claim 8, wherein the frequency priority strategy comprises at least one of:
a frequency priority determination rule determined based on a protocol; and/or
a frequency priority configuration based on a network-side configuration.

10. The apparatus of claim 8 or 9, wherein the conflict between at least two relative frequency priorities, comprises:
a conflict between a relative frequency priority between at least two frequencies determined based on a first frequency priority determination rule in the frequency priority determination rule determined based on the protocol and a relative frequency priority between the at least two frequencies determined based on a second frequency priority determination rule in the frequency priority determination rule determined based on the protocol; or
a conflict between a relative frequency priority between at least two frequencies determined based on a first frequency priority configuration in the frequency priority configuration based on the network-side configuration and a relative frequency priority between the at least two frequencies determined based on a second frequency priority configuration in the frequency priority configuration based on the network-side configuration.

11. The apparatus of claim 9 or 10, wherein the first frequency priority determination rule comprises: determining the relative frequency priority between at least two frequencies based on a supported slice priority; and
the second frequency priority determination rule comprises: determining the relative frequency priority between at least two frequencies based on a frequency priority between the at least two frequencies based on the network-side configuration.

12. The apparatus of claim 11, wherein the second determining unit is configured to:
determine the relative frequency priority between the at least two frequencies based on the supported slice priority; or
determine the relative frequency priority between the at least two frequencies by ignoring the frequency priorities of the at least two frequencies based on the network-side configuration; or
determine the relative frequency priority between the at least two frequencies based on the supported slice priority, and determine the relative frequency priority between the at least two frequencies, that has not been determined, according to the frequency priorities of the at least two frequencies based on the network-side configuration.

13. The apparatus of claim 9 or 10, wherein the first frequency priority configuration comprises: frequency priorities of different frequencies supporting a first slice and/or a first slice group based on the network-side configuration; and
the second frequency priority configuration comprises: frequency priorities of different frequencies supporting a second slice and/or a second slice group based on the network-side configuration.

14. The apparatus of claim 13, wherein the second determining unit is configured to:
in response to two slices and/or two slice groups with different slice priorities, determine the relative frequency priority between the at least two frequencies according to frequency priorities of different frequencies supporting a slice and/or a slice group with a higher priority based on the network-side configuration; or
in response to two slices and/or two slice groups with the same slice priority, select one of the slices and/or slice groups, and determine the relative frequency priority between the at least two frequencies according to frequency priorities of different frequencies supporting the slice and/or slice group based on the network-side configuration.

15. A user equipment, comprising a processor, a transceiver, a memory and an executable program stored on the memory and executable by the processor, wherein when the executable program is executed by the processor, the steps of the method for determining a cell reselection priority of any one of claims 1-7 are implemented.

16. A storage medium having an executable program stored thereon, wherein when the executable program is executed by a processor, the steps of the method for determining a cell reselection priority of any one of claims 1-7 are implemented.
